Europäisches Patentamt

European Patent Office

Office européen des brevets

(19)

(11) **EP 0 902 310 B1**

(12) **FASCICULE DE BREVET EUROPEEN**

(45) Date de publication et mention
de la délivrance du brevet:
**28.12.2005 Bulletin 2005/52**

(51) Int Cl.⁷: **G02B 6/44**

(21) Numéro de dépôt: **98402243.4**

(22) Date de dépôt: **10.09.1998**

(54) **Structures de câbles à fibres optiques autorésistantes à la compression**

Strukturen bei Faseroptischen Kabeln mit automatischem Kompressionswiderstand

Stuctures of fibre optical cables having an autoresistance to compression

(84) Etats contractants désignés:
**DE GB IT**

(30) Priorité: **11.09.1997 FR 9711536**

(43) Date de publication de la demande:
**17.03.1999 Bulletin 1999/11**

(73) Titulaire: **FRANCE TELECOM**
**75015 Paris (FR)**

(72) Inventeurs:
• **Ruello, Yves**
**22300 Lannion (FR)**
• **Louboutin, Jean-Pierre**
**22560 Trebeurden (FR)**
• **Morgand, Annie**
**22300 Lannion (FR)**

(74) Mandataire: **Bentz, Jean-Paul et al**
**Novagraaf Technologies**
**Cabinet Ballot**
**122, rue Edouard Vaillant**
**92593 Levallois Perret Cedex (FR)**

(56) Documents cités:
**EP-A- 0 328 409        EP-A- 0 410 622**
**EP-A- 0 428 036        EP-A- 0 545 622**
**DE-A- 3 232 108        DE-A- 4 109 147**
**FR-A- 2 559 592        FR-A- 2 728 694**
**FR-A- 2 747 201        US-A- 4 318 588**
**US-A- 5 408 564**

## Description

La présente invention concerne le domaine des câbles à fibres optiques et notamment les structures de renfort de tels câbles et fibres.

Les fibres optiques utilisées pour les télécommunications par signaux optiques sont des éléments à base de silicates (verre ou quartz) particulièrement fragiles et supportant mal les efforts de poids, de traction et de compression. Il est connu d'utiliser des structures de renfort pour constituer un câble de fibres optiques destiné à couvrir de longues ou de courtes distances de communication.

Le brevet FR-B1-2 728 694 au nom de la demanderesse enseigne une structure élémentaire de renfort dans laquelle au moins une fibre optique est insérée dans une coque rigide appelée microporteur, pour former un module optique (ou encore micromodule) renforcé afin de limiter la courbure de la fibre et l'atténuation des signaux optiques.

La demande de brevet n° FR-A-2 747 201 (publiée le 10 octobre 1997) au nom de la demanderesse enseigne une structure plus évoluée dans laquelle des modules optiques (micromodules) sont associés à des modules de renforts rigides (microrenforts) et moulés dans une gaine polymérique pour former un câble. La demande décrit essentiellement des câbles plats dans lesquels les micromodules et les microrenforts sont coplanaires, le câble gainé ayant une forme de ruban.

Les documents DE-A1-32 32 108, EP-A2-0 328 409, EP-B1-0 428 036 décrivent d'autres structures de câbles renforcés à modules optiques coplanaires.

Les câbles connus ont l'inconvénient de présenter une rigidité élevée liée aux structures destinées à résister aux contraintes de compression et de traction.

Les structures de câble en ruban présentent en outre des inconvénients de torsion sur les parcours courbes à faible rayon.

De tels inconvénients prétéritent les applications domestiques, les câbles domestiques devant supporter des contraintes mécaniques spécifiques dues aux faibles rayons de courbures dans les boîtiers, à des câblages intérieurs, à des chocs thermiques et à des câblages aériens avec allongement.

Un objet de l'invention est de réaliser un câble de fibres optiques sans les inconvénients précités et en particulier adapté aux spécificités de la distribution domestique.

Cet objet est atteint selon l'invention à partir d'une structure modulaire de câble à fibres optiques. La structure associe au moins un module de renfort souple à au moins un module optique. Chaque module optique est autorésistant en compression, le module de renfort souple étant simplement résistant en traction pour préserver la flexibilité globale du câble.

Le module de renfort est constitué de mèches de fibrilles non durcies, contrairement aux renforts rigides connus qui comportent des mèches de fibres de renfort mécaniques assemblées au moyen de résine thermodurcissable. Avec des mèches de fibrilles non durcies, le module de renfort travaille essentiellement lorsque le câble est soumis à un effort de traction. Quant aux contraintes de compression, elles sont supportées essentiellement par les modules optiques autorésistant.

L'invention est définie à la revendication 1. Il est donc prévu de réaliser un câble de transmission optique modulaire comprenant plusieurs modules de renfort et optiques, chaque module optique comportant:

- une fibre optique gainée, revêtue par
- une couche intermédiaire de découplage et par
- une coque rigide formant microporteur,

un module de renfort étant associé au moins à un module optique, les modules étant moulés dans une gaine externe, avec la particularité qu'un module de renfort souple est associé à des modules optiques autorésistant en compression afin d'obtenir un câble ayant une flexibilité élevée jointe à une résistance en compression élevée.

Selon l'invention, les modules de renfort sont formés de mèches de microfibres non-durcies au moyen de résine.

Il est prévu, selon un mode de réalisation particulier de l'invention, d'obtenir une structure concentrique, en réalisant un câble de transmission optique comprenant au moins un module optique inséré dans un module de renfort tubulaire moulé dans une gaine externe, le module de renfort tubulaire étant souple, le ou les modules optiques étant autorésistants en compression de sorte que le câble a une flexibilité élevée jointe à une résistance en compression élevée

L'invention est réalisée en général avec un câble de transmission optique modulaire comprenant plusieurs modules moulés dans une gaine externe, le câble comprenant au moins un module optique autorésistant en compression associé avec au moins un module de renfort souple pour avoir une flexibilité élevée jointe à une résistance en compression élevée.

De préférence, les mèches de module de renfort sont recouvertes en surface d'un matériau adhérent de type hot-melt.

Selon une variante de la réalisation préférée, les mèches de module de renfort ont des interstices remplis de poudre gonflante ou de hot-melt afin d'éviter une pénétration d'humidité.

Il est prévu qu'un module optique comporte en outre un revêtement final en matériau antiadhésif d'une épaisseur de l'ordre de 100 à 200 micromètres, afin de permettre un glissement du module optique dans la gaine externe, le revêtement ou la gaine étant, de préférence, ignifugé.

Diverses géométries de câbles sont en outre prévues selon l'invention.

D'autres caractéristiques, buts et avantages de la présente invention apparaîtront à la lecture de la description ci-après et des dessins annexés, donnés uniquement à titre d'exemples non limitatifs.

Sur les dessins annexés :

- la figure 1 représente une vue schématique en coupe transversale de module optique élémentaire mis en oeuvre selon l'invention,
- la figure 2 représente une vue en coupe d'un câble monofibre concentrique selon un premier mode de réalisation de l'invention,
- la figure 3 représente une vue en coupe d'un câble monofibre concentrique selon un deuxième mode de réalisation de l'invention,
- la figure 4 représente des vues en coupe de câbles planaires selon un troisième mode de réalisation de l'invention, trois variantes monofibre, bifibre et tetrafibre étant illustrées respectivement aux figures 4A, 4B et 4C,
- la figure 5 représente une vue en coupe d'un câble bifibre selon un quatrième mode de réalisation de l'invention,
- la figure 6 représente des vues en coupe de câbles bifibres cylindriques selon un cinquième mode de réalisation de l'invention, trois variantes étant illustrées aux figures 6A, 6B et 6C,
- la figure 7 représente des vues en coupe de câbles tetrafibres cylindriques selon un sixième mode de réalisation de l'invention, deux variantes étant illustrées aux figures 7A et 7B,
- la figure 8 représente des vues en coupe de câbles pentafibres selon l'invention, une variante pentafibre du sixième mode de réalisation étant illustrée à la figure 8A, un câble pentafibre selon un septième mode de réalisation étant illustré à la figure 8B,
- la figure 9 représente des vues en coupe de câbles à jonc selon un huitième mode de réalisation de l'invention, une réalisation de câble tetrafibre et une réalisation de câble octofibre étant illustrées respectivement aux figures 9A et 9B.

On distinguera dans la suite de la description deux types de fibres, les fibres optiques et les fibres de renfort qui au delà de leur texture ont des fonctions différentes, les premières étant destinées à transmettre des signaux optiques, les secondes ayant une fonction mécanique de renforcement des premières et de résistance aux contraintes exercées sur le câble en général.

Cette distinction se retrouve au niveau du module optique et module de renfort qui composent le câble de transmission optique modulaire.

Cependant, selon l'invention, il est prévu d'adopter des modules optiques disposant en eux-mêmes d'une structure de renfort leur permettant de résister aux contraintes de compression.

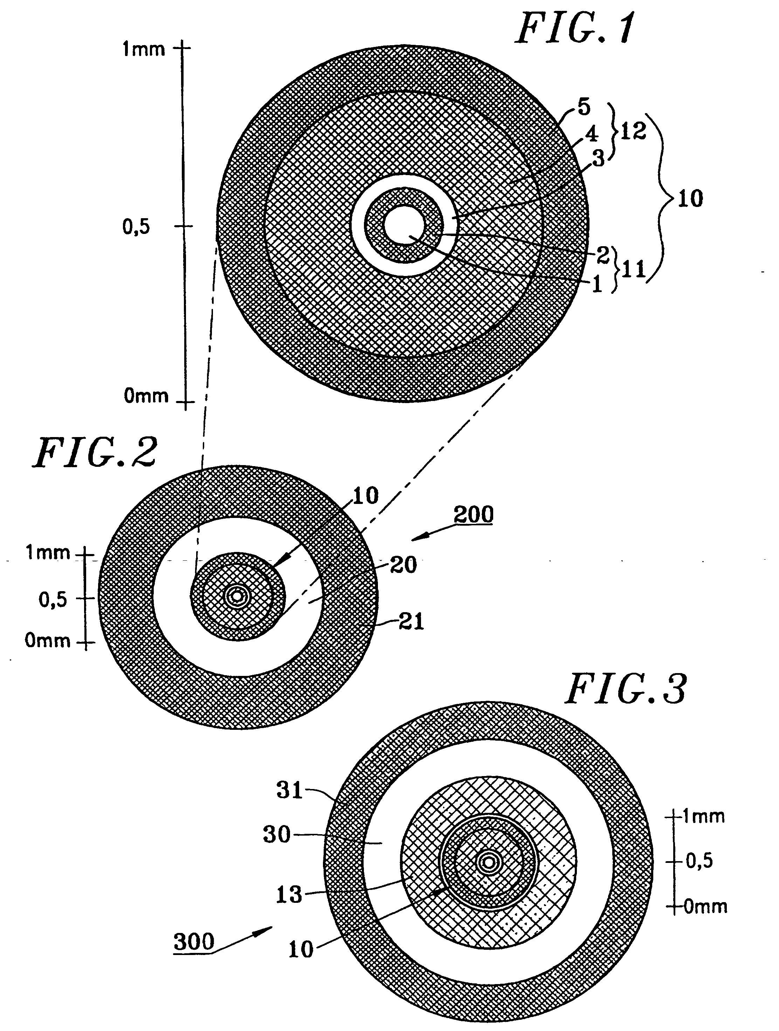

La figure 1 illustre ainsi la structure élémentaire d'un module optique 10 autorésistant en compression. Le module optique 10 est constitué d'un micromodule 11, d'une fine couche 3 de matériau de découplage et d'une coque rigide 12 appelée microporteur.

La fibre optique 1 du micromodule 11 est un guide en silice monomode ou multimode ayant typiquement un diamètre de 0,125 mm, recouvert d'un gainage 2. La fibre gainée 11 a par exemple un diamètre de 0, 25 mm.

La couche intermédiaire de découplage 3 est constituée d'une formulation de polymère thermoplastique.

Le microporteur 12 est constitué d'une coque recouverte de préférence d'une autre gaine 5 thermoplastique.

Une telle structure de module optique 10 est analogue au micromodule décrit dans le brevet FR-2 728 694.

On notera toutefois que la coque 4 est constituée de préférence de matériau composite à base de fibres renforcés par polymérisation, et que son diamètre atteint par exemple 0,9 mm. Le diamètre du module optique 10 est plus généralement de l'ordre de 0,7 à 1 mm et atteint 1,2 mm avec l'alternative d'un revêtement 5 final de gainage.

Le matériau composite est formé de fibrilles de verre de 5 à 10 micromètres de diamètre rassemblées en mèches et durcies avec de la résine pour former une coque 4 rigide. La résine est constituée de préférence de polymères de type polyester, vinylester, époxy ou polyuréthane.

Ainsi, on obtient une coque 4 rigide capable d'absorber avantageusement les contraintes de compression.

En effet l'épaisseur d'une telle coque 4 composite confère au module optique une résistance à l'allongement de l'ordre de 150 à 400 N mesurée pour un allongement de 1% et une résistance à l'écrasement supérieure à 15000 N m$^{-1}$ On constate encore qu'un effet de paille apparait seulement à un rayon de courbure inférieur à 15 mm. On notera en outre qu'avec une fibre optique commercialisée sous la référence G652 ou analogue, l'atténuation optique subit des variations inférieures à 0,1 dB dans une plage de températures comprises entre +70°C et -10°C, les variations restant inférieures à 0,5 dB entre -10°C et -30°C.

Les spécifications techniques de câble optique aérien que l'on cherche à atteindre sont toutefois plus élevées. A titre indicatif, une résistance à l'allongement d'au moins 500 N mesurée pour un allongement de 0,3% est recherchée.

L'invention prévoit alors de constituer un câble en associant un ou plusieurs modules optiques autorésistant en compression avec un ou plusieurs modules de renfort souple, un module de renfort souple étant essentiellement destiné à résister aux efforts de traction.

Une telle disposition s'oppose aux structures connues de câbles optiques dans lesquels les renforts supportent seuls toutes les contraintes mécaniques et doivent être rigides pour résister aux contraintes de compression et de traction.

Un avantage de la structure selon l'invention est la flexibilité du câble obtenu. En effet, l'élément le plus rigide de la structure, la coque 4, a un diamètre réduit, et par principe mécanique, l'influence de cet élément sur la rigidité du câble est minimalisée.

Un autre avantage de la structure de câble selon l'invention est la légèreté du câble conséquente à l'adoption de modules de renfort souples. Contrairement aux renforts connus qui sont chargés de résine polymère et dimensionnés pour résister aux contraintes de compression, un module de renfort souple est constitué de mèches de fibrilles non-durcies au moyen de résine, donc plus léger.

Le module de renfort est de façon générale formé de microfibres liées sous forme de mèches sans collage ou durcissement à l'aide de résine.

Les microfibres sont constituées d'un matériau à fort module de Young, tel que le carbone, l'aramide, la céramique, les polymères, les verres de type E,R,S ou d'une combinaison de fibres de tels matériaux.

Les microfibres (ou fibrilles) ont un diamètre voisin du micromètre mais les mèches formées peuvent être de diverses dimensions. Le nombre et la taille des mèches de microfibres sont choisis de sorte que la résistance R d'un câble mono-module est de préférence supérieure à 170 000 N, la résistance R étant donnée par la formule suivante :

$$R = E.S$$

où E est le module de Young,
et S est la surface effectivement occupée par les mèches de fibres sur une section transversale du module. De préférence, les microfibres sont traitées en surface pour faire apparaître des groupes chimiques libres ayant une fonction d'attraction des fibres entre elles (liaison par radicaux hydroxyle). De plus les mèches du module formé sont de préférence recouvertes en surface d'un matériau adhérent de type hot-melt déposé à chaud après formage des mèches. Le terme "hot-melt" est utilisé pour qualifier toute colle thermofusible et la technique de collage à chaud connue de l'homme du métier. Le matériau adhérent est par exemple constitué d'éthylène vinylacétate, de polyamide, de néoprène, de caoutchouc nitrile ou d'une combinaison de tels matériaux. Les fibres sont ainsi modérément liées.

Un avantage d'un tel module de renfort à base de fibres non-durcies est qu'il résiste à la traction sans nuire à la souplesse du câble.

Comme les mèches de fibres ne sont pas remplies de résine, l'invention prévoit en outre un remplissage des interstices des mèches avec de la poudre gonflante ou simplement du hot-melt afin d'éviter une pénétration d'humidité dans le câble.

Selon l'invention, le câble est constitué d'une association de modules de renfort et optiques, une gaine externe moulant les modules.

Les diverses géométries d'assemblage de modules et de gaine externe font l'objet de plusieurs modes de réalisation exposés ci-après.

De façon générale toujours, la gaine externe est formée d'un matériau polymère à fort module de Young déposé par extrusion ou par pultrusion sur l'assemblage de modules.

Le matériau de gainage externe est de préférence un polymère haute densité, de type polyéthylène, polyamide, polyester, polyéther-ether-cetone, polyéther imide, polyéther sulfone ou équivalent. Des polychlorures de vinyle chargés ou des polyoléfines chargés notamment avec des billes ou des microfibres de verre peuvent encore constituer la gaine externe.

Le matériau de gainage a typiquement un module de Young de 1000 MPa à 5000 MPa dans les conditions d'utilisation afin de contribuer à la résistance du câble.

La figure 2 illustre un mode de réalisation simple de câble à fibres optiques autorésistantes à la compression selon l'invention.

Le câble 200 monofibre, selon ce premier mode de réalisation, comporte un seul module 10 optique axial, a la constitution exposée précédemment en regard de la figure 1. Le module 10 optique est revêtu directement de mèches de fibres formant un module 20 de renfort souple tubulaire selon l'invention. Les modules 10, 20 sont enfin moulés dans une gaine externe 21.

Selon un premier exemple non-limitatif de réalisation, le module 20 de renfort tubulaire a des diamètres interne de 1,2 mm et externe de 2,2 mm, l'épaisseur de mèches de microfibres étant alors de 0,5 mm. La gaine externe 21 a dans ce premier exemple une épaisseur de 0,7 mm, soit un diamètre final de câble de 3,6 mm. On obtient ainsi un câble 200 monofibre ayant une résistance supérieure à 500 N mesurée pour un allongement de 0,3%.

Dans un second exemple de réalisation de câble monofibre 200, le module 20 de renfort tubulaire a des diamètres interne de 1,2 mm et externe de 2 mm, l'épaisseur de mèches étant limitée à 0,4 mm. La gaine externe 21 a une épaisseur limitée à 0,5 mm dans ce second exemple, soit un diamètre final de câble de 3 mm. On obtient alors un câble 200 monofibre ayant une résistance de 500 N mesurée pour un allongement de 0,6%. Le câble réalisé selon ce second exemple a l'avantage d'être peu encombrant et léger.

Un tel allègement de la structure de câble, avec une réduction de l'ordre de 20 à 50% du nombre de fibres et de la surface de section effectivement occupée par les mèches de fibres, peut être appliqué chaque fois qu'un allongement de fibre de 0,6% est acceptable. L'allègement avec réduction de surface de mèches de fibres est applicable notamment aux autres modes de réalisation ci-après.

La figure 3 représente un deuxième mode de réalisation dans lequel une structure concentrique de câble 300 monofibre proche du câble 200 est adoptée.

A la différence du premier mode de réalisation, un tubage 13 intermédiaire est prévu, selon l'invention, entre le module 10 optique axial et le module 30 de renfort périphérique. Le tube 13 est constitué d'un matériau plastique choisi notamment parmi les polymères tel que les polychlorures de vinyle et polyoléfines chargés. Le matériau plastique est de préférence ignifugé, par exemple en le traitant avec de l'hydrate d'alumine ou d'une autre substance anti-feu, et exempt d'halogénure (chlorure, fluorure, bromure) pour empêcher des émanations toxiques.

Le tube 13 plastique a une épaisseur de paroi de l'ordre de 0,5 mm. Le tube 13 a par exemple des diamètres intérieur de 1,3 mm et extérieur de 2,3 mm comme représenté figure 3.

Un avantage du deuxième mode de réalisation est l'excellente tenue en compression et en cisaillement du câble 300 obtenu. Le tubage 13 augmente en particulier la résistance aux chocs mécaniques, aux rayonnements et aux agressions physico-chimiques. De telles spécificités destinent particulièrement le câble 300 à une utilisation en locaux techniques (tunnels, gaines techniques, sous-sols) et à des câblages en façade de bâtiments.

On notera, selon les exemples de dimensionnement précédents, qu'un module optique 10 gainé (diamètre 1,2 mm) est inséré librement dans le tube 13 (diamètre intérieur 1,3 mm). Cette disposition permet au module optique 10 d'avoir des marges de mouvement aussi bien en dilatation, en glissement, voire en rétractation s'il est prévu de lui donner du jeu lors de la fabrication.

De plus, le revêtement 5 final de gainage du module optique 10 est de préférence constitué d'un matériau antiadhésif, afin de permettre un glissement du module optique dans le tube ou plus généralement dans le câble. Le matériau antiadhésif peut être notamment un matériau polyamide, polyester, polyéther sulfone, polyéther cétone ou polyéther imide. Ce revêtement 5 final gainant le module 10 peut éventuellement être ignifugé.

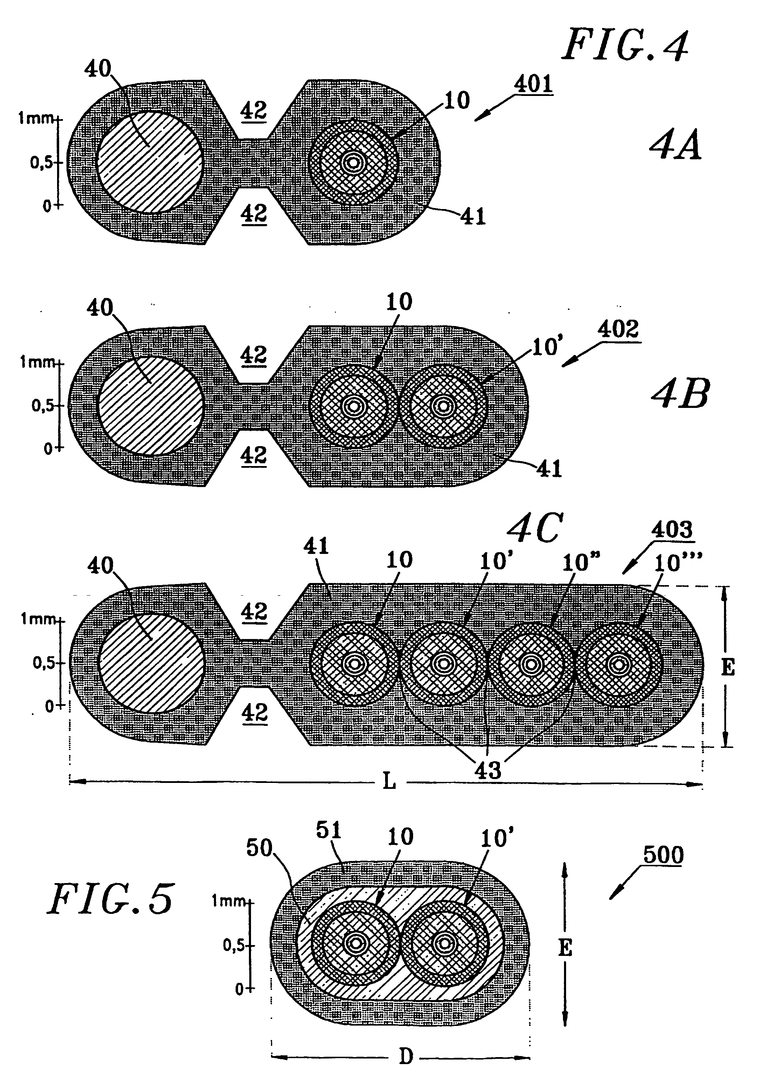

La figure 4 représente un troisième mode de réalisation de câble dans lequel les modules sont des axes sensiblement coplanaires.

Selon l'invention, un module de renfort 40 souple unique de forme cylindrique est disposé latéralement et avec écartement par rapport aux modules optiques associés.

La figure 4A montre ainsi un câble 401 monofibre comportant un module 40 de renfort et un module 10 optique moulés dans la gaine 41 externe. Le module 40 et le module 10 sont espacés et le moulage de la gaine présente une ou deux rainures 42 longitudinales creusées suivant l'axe médian d'espacement des modules 10 et 40. Une telle disposition permet de séparer aisément le module 10 optique et le module 40 de renfort lors des branchements domestiques. Un autre avantage d'une telle disposition est que sur une portion aérienne, le câble 401 peut être fixé en serrant une pince d'accrochage sur le module 40 de renfort latéral sans porter atteinte au module optique.

Le rainurage 42 est cependant optionnel, la gaine pouvant avoir une section pleine, notamment rectangulaire ou ovalisée.

A titre d'exemple non limitatif de dimensionnement, le cylindre de mèches de microfibres constituant le module 40 de renfort a un diamètre de 1,5 mm, le module 10 optique ayant un diamètre de 1,2 mm ; la gaine 4 externe en polyéthylène haute densité a une épaisseur supérieure à 0,4 mm. Le câble obtenu selon cet exemple, a des dimensions en largeur totale de 4,7 mm et en épaisseur totale de 2,3 mm.

On obtient ainsi un câble 401 présentant une résistance à l'allongement supérieure à 500 N mesuré pour un allongement de 0,3%.

Les figures 4B et 4C illustrent deux variantes de câbles à modules coplanaires, un câble 402 bifibre étant illustré figure 4B et un câble 403 tetrafibre étant illustré figure 4C.

On peut utiliser des modules 40, 10, 10', 10'', 10''' et un gainage 41 externe ayant les mêmes dimensionnements que dans l'exemple concernant le câble 401.

On obtient alors un câble 402 ayant une largeur de 5,7 mm et une résistance supérieure à 600 N à allongement de 0,3%. Le câble 403 a une largeur de 8,3 mm et une résistance supérieure à 750 N mesurée pour un allongement de 0,3%.

Un avantage du câble obtenu selon le troisième mode de réalisation est sa légèreté.

Selon les exemples précédents la masse linéique du câble 401 monofibre est inférieure à 8 g.m$^{-1}$ tandis que la masse linéique du câble 403 tetrafibre est inférieure à 12 g.m$^{-1}$ soit le tiers de la masse linéique d'un petit câble aérien électrique en cuivre.

Les modules optiques 10, 10', 10'', 10''' sont de préférence disposés côte à côte et un collage 43 peut être prévu au niveau de leur zone de contact pour améliorer l'assemblage des modules 10, 10', 10'', 10''' entre eux et éventuellement avec la gaine 41.

La figure 5 illustre un quatrième mode de réalisation de l'invention dans lequel plusieurs modules optiques autorésistants 10, 10' sont noyés dans un module de renfort souple 50, l'assemblage étant recouvert d'un gainage externe 51.

Les modules optiques 10 et 10' peuvent être encollés par exemple au moyen d'une fine couche de hot-melt de type EVA ce qui permet de prolonger conjointement mais aussi de séparer aisément les modules 10 et 10' lors de câblages et de branchements domestiques.

Le module 50 de renfort entoure et comble les interstices entre les modules optiques pour obtenir une section ovalisée ayant par exemple une épaisseur supérieure à 0,3 mm de mèches de fibres. La surface extérieure du module 50 de renfort est recouverte d'une

Le câble 500 ainsi formé présente une section de grand axe D de 4 mm et de petit axe E de 2,8 mm. On obtient alors une résistance supérieure à 600 N pour un allongement de 0,3%.

Un avantage du câble 500 est sa simplicité de fabrication et d'exploitation.

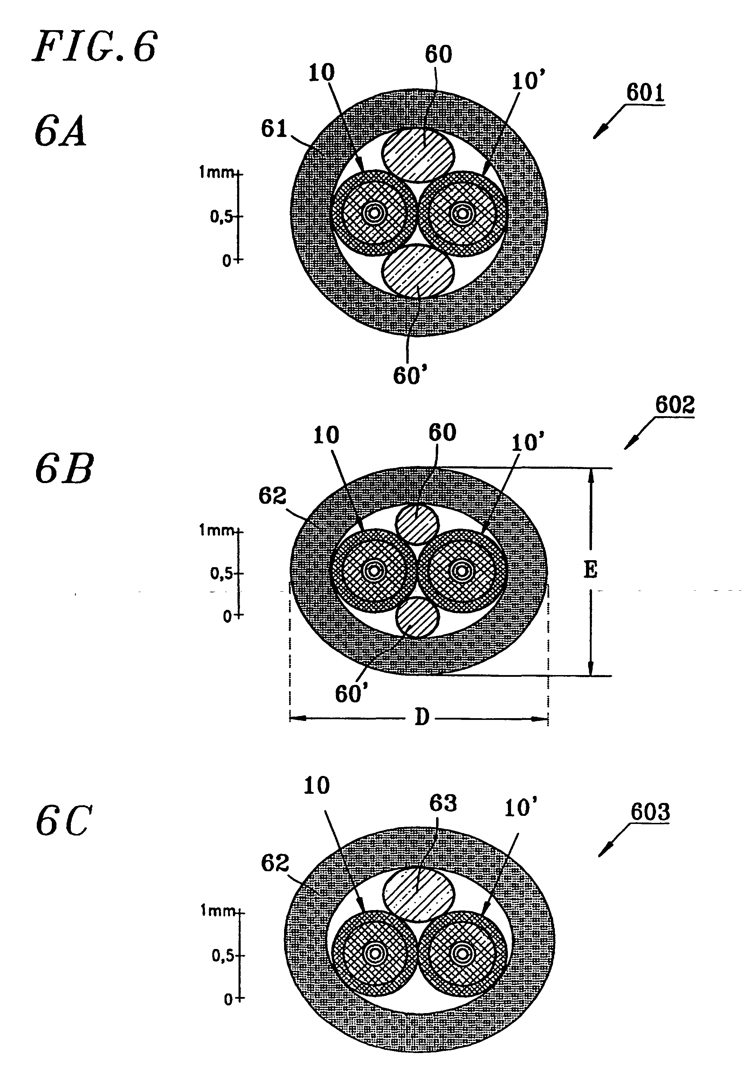

La figure 6 représente des câbles bifibres selon un cinquième mode de réalisation dans lequel les deux modules optiques 10 et 10' autorésistants sont associés à un ou deux modules 60 et 60' de renfort souple. A la différence du câble 500, tous les modules 10, 10', 60, 60' et 63 des câbles 601, 602 et 603 sont cylindriques et assemblés en faisceau, en laissant des interstices avant le gainage 61 externe.

Comme visible sur la figure 6A, le câble 601 a une section cylindrique de révolution, la gaine externe 61 formant une couronne circulaire.

Le faisceau disposé dans la lumière du câble 601 comporte deux modules optiques 10 et 10' en contact ou encollés et deux modules de renfort 60 et 60' de part et d'autre des modules optiques. Avec par exemple des modules optiques ayant un diamètre de 1,2 mm, des modules de renfort ayant un diamètre de 1 mm, et une gaine ayant une épaisseur de 0,5 mm, on obtient un câble 601 ayant un diamètre de 3,4 mm et présentant une résistance supérieure à 600 N pour 0,3% d'allongement.

Des câbles plus légers peuvent être obtenus en diminuant la section effectivement occupée par les fibres de modules de renfort, comme illustré aux figures 6B et 6C.

La figure 6B représente un câble 602 comportant à la différence du câble 601 deux modules de renfort plus petits et une gaine externe 62 de section ovalisée.

Avec par exemple deux modules de renfort cylindriques ayant un diamètre de 0,6 mm, et un gainage d'épaisseur de 0,5 mm, on obtient un câble présentant une résistance à l'allongement de 600 N mesurée pour un allongement de 0,6%.

La figure 6C représente un câble 603 de section ovalisée dans lequel, à la différence des câbles 601 et 602, les deux modules 60 et 60' de renfort ont été remplacés par un seul module 63 de renfort.

Avec un faisceau comprenant deux modules optiques 10, 10' et un module de renfort 63 rond ayant par exemple un diamètre de 1 mm, recouvert de gainage ovalisé d'épaisseur 5 mm, on obtient un câble présentant une résistance de 600 N mesurée pour un allongement de 0,6%.

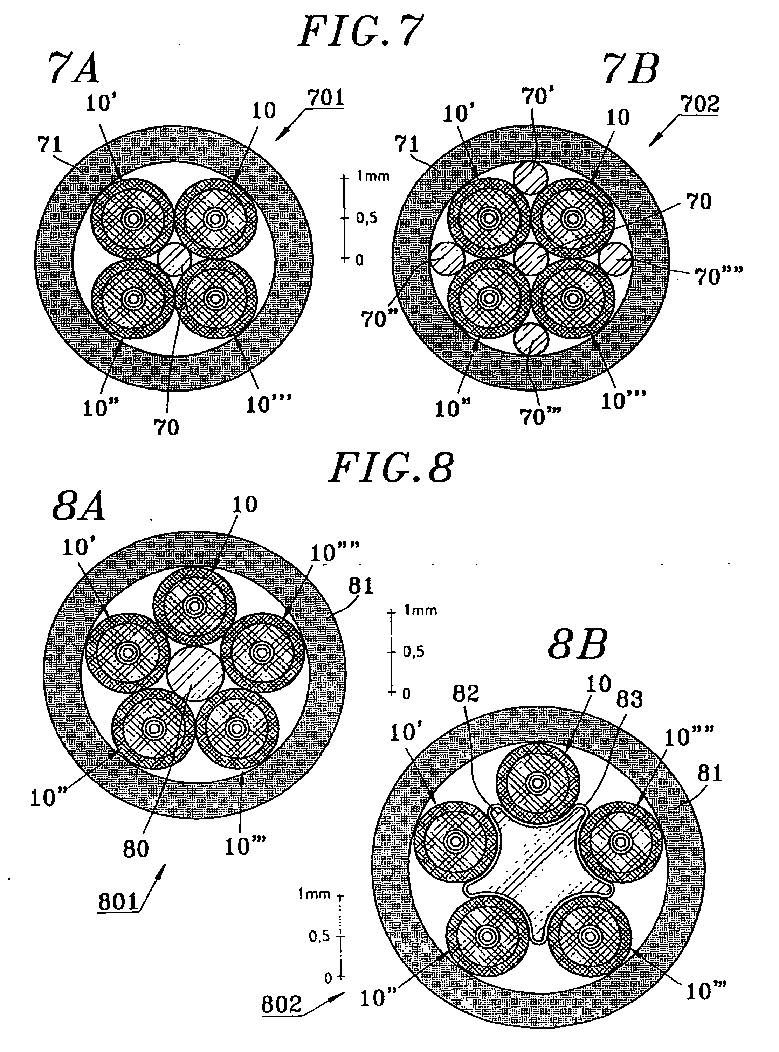

La figure 7 représente des câbles tétrafibres 701 et 702 réalisés selon un sixième mode de réalisation de l'invention. Les câbles 701 et 702 comportent également un faisceau de modules 10 optiques autorésistants et de modules 70 de renfort souples recouvert d'un gainage 71 cylindrique qui cercle le faisceau en laissant des interstices.

Le câble 701, illustré figure 7A, comporte un faisceau comprenant un seul module de renfort 70 central, cylindrique, et quatre modules optiques 10, 10', 10" et 10''' disposés régulièrement autour du module de renfort 70.

Le câble 702, illustré figure 7B, est une variante avec un faisceau comprenant cinq modules de renfort 70, 70', 70", 70''' et 70''''. Quatre modules de renfort 70' à 70'''' sont ajoutés en périphérie d'un faisceau semblable au faisceau 70, 10, 10', 10", 10''' du câble 701. Un tel câble à cinq modules de renfort 70 à 70'''' présente une résistance élevée.

Avec des modules 70 de renfort souple ayant un diamètre de 0,5 mm et un gainage de 5 mm, on obtient ainsi un câble 701 présentant une résistance supérieure à 700 N pour un allongement de 0,6% et un câble 702 présentant une résistance supérieure à 700 N pour un allongement de 0,3%.

La figure 8 représente des câbles pentafibres 801 et 802 réalisés selon l'invention.

Le câble 801, illustré figure 8A, comporte à l'instar du câble 701, objet du sixième mode de mode de réalisation, un faisceau à un seul module de renfort 80 central et à cinq modules optiques 10 à 10''''.

Le câble 802, objet d'un septième mode de réalisation comporte un surremplissage central de mèches de renfort en guise de module 82 de renfort souple. Le coeur 82 du faisceau est donc constitué d'un remplissage de mèches de microfibres d'aramide ou d'autre matériau autour duquel sont disposés régulièrement les cinq modules optiques 10 à 10''''.

Un avantage de la structure de câble 802 est sa forte résistance à l'écrasement.

De préférence, il est prévu de recouvrir la surface du module 82 de renfort d'une couche 83 de matériau adhésif pour solidariser les modules 82 et 10 à 10''''. La couche 83 adhésive a une faible épaisseur, de l'ordre de 50 à 200 micromètres par exemple. Le matériau adhérent est constitué de préférence de hot-melt à base d'éthylène vinylacétate, de polyamide, de néoprène ou de caoutchouc nitrile.

Une telle disposition a l'avantage supplémentaire de permettre une grande déformation du câble lors de la pose avant que les modules ne soient sollicités mécaniquement.

A titre d'exemple de réalisation, le surremplissage de fibres constituant le module 82 de renfort présente un rayon variant entre 0,5 et 1,1 mm, le câble ayant un diamètre de 4,8 mm.

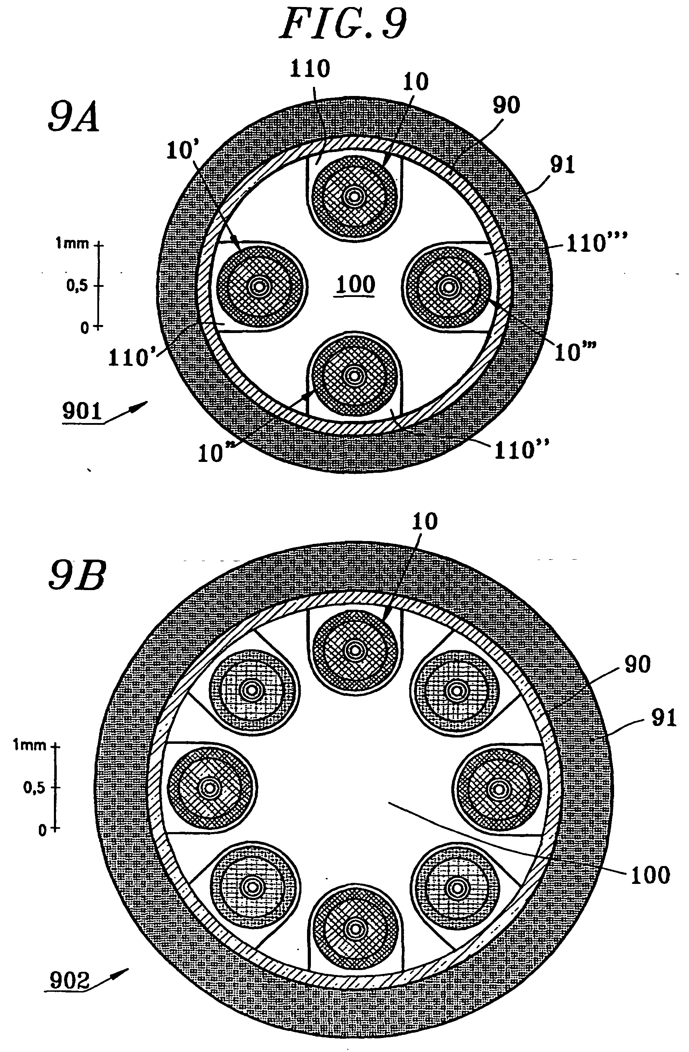

Enfin, la figure 9 représente un huitième mode de réalisation de l'invention dans lequel les modules 10 optiques sont disposés en périphérie d'un jonc 100 central dans des cannelures évidées à la surface du jonc 100. Le jonc est constitué de préférence d'un matériau thermoplastique ou thermodurcissable à base par exemple de polyoléfine, polyamide ou polyesters.

Comme visible sur la figure 9A représentant un câble tetrafibre 901, les quatre cannelures 110 à 110'" sont de préférence à fond arrondi et le jonc ne comporte pas de renfort central. En effet, un module 90 de renfort souple de forme tubulaire recouvre le jonc 100 après insertion de quatre modules optiques 10, 10', 10" et 10'" dans les cannelures 100, 110', 110" et 110'" respectives.

A titre d'exemple non limitatif, le jonc 100 thermoplastique a un diamètre de 3,8 mm, les cannelures étant adaptées pour recevoir les modules optiques 10 de diamètre 1,2 mm.

L'ossature centrale du jonc 100 avec le faisceau de modules optiques 10 est recouverte d'un module 90 de renfort formé d'une couche de fibres ayant une épaisseur de 0,3 mm et finalement d'une gaine externe d'épaisseur 0,7 mm. Un tel câble de diamètre de 5,8 mm présente une résistance supérieure à 700 N pour un allongement de 0,3%.

Un avantage d'une telle ossature est la grande résistance à l'écrasement conférée au câble.

La figure 9B présente un câble 902 octofibre selon le huitième mode de réalisation de l'invention, de structure semblable au câble 901.

A titre d'exemple non limitatif de réalisation, le câble 902 comporte un jonc 100 central de diamètre 5,5 mm, huit modules 10 optiques autorésistant de diamètre 1,2 mm, un module 90 de renfort souple formé d'une couche de mèches de fibres d'épaisseur de 0,25 mm et finalement une gaine externe d'épaisseur de 0,7 mm.

Un tel câble 902 a un diamètre de 7,4 mm et présente une résistance à l'allongement supérieure 800 N correspondant à un allongement de 0,3%.

En conclusion, la structure de câble optique prévue par l'invention est déclinée selon huit modes de réalisation non limitatifs, et présente l'avantage de combiner souplesse et résistances en traction et en compression élevées.

Elle présente aussi de nets avantages de légèreté, sa masse linéique étant notamment inférieure à celle de câble électrique en cuivre. Un avantage important des modes de réalisation de câbles selon l'invention est la facilité de fabrication. Consécutivement, le coût de fabrication est très réduit.

En outre, la pose de tels câbles est aisée. En effet, cette structure légère demande une faible tension de pose aérienne adaptée aux pinces d'accrochage couramment utilisées. D'autre part, la structure modulaire permet de séparer facilement les modules optiques destinés à chaque abonné.

La pose de câbles optiques selon l'invention est rendue aussi simple que la pose de fils électriques et l'installation peut être menée rapidement par un seul technicien.

De telles caractéristiques et avantages du câble optique selon l'invention sont particulièrement favorables au câblage domestique et multi-usages.

D'autres applications, variantes et caractéristiques de l'invention apparaîtront à l'homme du métier sans sortir du cadre de l'invention telle que définie aux revendications ci-après.

## Revendications

1. Câble de transmission optique modulaire (200, 300, 401, 402, 403, 500, 601, 602, 603, 701, 702, 801, 802, 901, 902) flexible et résistant en compression comprenant au moins un module optique (10) auto-résistant en compression, et au moins un module de renfort (20, 30, 40, 50, 60, 63, 70, 80, 82, 90) souple, moulés dans une gaine externe (21, 31, 41, 51, 61, 62, 71, 81, 91), chaque module optique comportant une seule fibre (1) optique gainée (2), revêtue par une couche (3) intermédiaire de découplage et par une coque (4) rigide formée de mèches de microfibres durcies avec de la résine et formant microporteur (12), chaque module de renfort étant constitué de mèches de microfibres non-durcies au moyen de résine, le ou les modules de renfort étant formés d'un remplissage de mèches occupant une surface effective totale dans la section transversale du câble.

2. Câble selon la revendication 1, dans lequel le module optique à coque rigide a une résistance à l'allongement de l'ordre de 150 à 400 Newtons pour un allongement de 1% et une résistance à l'écrasement supérieure à 15 000 Newtons par mètre de longueur.

3. Câble selon l'une quelconque des revendications 1 et 2, dans lequel les microfibres des mèches de module de renfort souple ont un diamètre voisin du micromètre.

4. Câble selon l'une des revendications 1 à 3, dans lequel les mèches de module de renfort sont formées de fibres ou d'un mélange de fibres choisies parmi un groupe comprenant les fibres en matériau aramide, carbone, céramique, polymère, verre de type E, R et S.

5. Câble selon l'une des revendications 1 à 4, dans lequel un module (10) optique comporte en outre un revêtement (5) final en matériau antiadhésif d'une épaisseur de l'ordre de 100 à 200 micromètres, afin de permettre un glissement du module (10) optique dans le câble.

6. Câble selon la revendication 5, dans lequel le revêtement (5) final antiadhésif est formé d'un matériau choisi parmi un groupe comprenant les matériaux polyamide, polyester, polyéther sulfone, polyéther cétone et polyéther imide.

7. Câble selon la revendication 6, dans lequel le revêtement (5) est ignifugé.

**8.** Câble selon l'une des revendications 1 à 7, dans lequel la gaine (21) externe est formée d'un polymère ayant un module d' Young de l'ordre de 1000 MPa à 5000 MPa dans les conditions d'utilisation.

**9.** Câble selon l'une des revendications 1 à 8, dans lequel la gaine (21) externe est formée d'un polymère haute densité choisi parmi un groupe de polymères comprenant les polyéthylène, polyamide, polyester, polyéther-éther cétone, polyéther imide, polyéther sulfone, polyoléfine chargé, polychlorure de vinyle chargé et notamment les polymères chargés de billes ou de microfibres de verres.

**10.** Câble (300) selon l'une des revendications 1 à 9, dans lequel un module (10) optique est disposé dans un tube (13) en polymère, le tube ayant une paroi d'épaisseur de l'ordre de 200 à 1000 micromètres.

**11.** Câble (200,300) selon l'une des revendications 1 à 10, dans lequel un module (10) optique est inséré dans un module (20, 30) de renfort tubulaire.

**12.** Câble (500) selon l'une des revendications 1 à 11, comportant un faisceau de modules (10, 10') optiques noyés dans un module (50) de renfort.

**13.** Câble (901,902) selon l'une des revendications 1 à 12, comportant une ossature formée par un jonc (100) thermoplastique, un faisceau de modules (10, 10', 10'', 10''') optiques étant disposés dans des évidements du jonc.

**14.** Câble (901, 902) selon la revendication 13, dans lequel le faisceau de modules (10, 10') optiques est inséré dans un module (90) de renfort tubulaire.

**15.** Câble (601, 602, 603, 701, 702, 801, 802) selon l'une des revendications 1 à 14, comportant un faisceau cylindrique comprenant des modules de renfort (60, 60', 63, 70, 80, 82) et optiques (10, 10').

**16.** Câble (401, 402, 403) selon l'une des revendications 1 à 9, comprenant des modules (40, 10, 10') ayant des axes sensiblement coplanaires, la gaine (41) externe formant un ruban plat, et comportant un module (40) de renfort unique disposé latéralement et avec un écartement par rapport aux modules (10, 10') optiques associés, afin de fixer le câble par serrage sur le module de renfort latéral.

**Patentansprüche**

**1.** Modulförmiges optisches Übertragungskabel (200, 300, 401, 402, 403, 500, 601, 602, 603, 701, 702, 801, 802, 901, 902), das biegsam und kompressionsfest ist, mit zumindest einem selbsttätig kompressionsfesten, optischen Modul (10) und zumindest einem weichen Verstärkungsmodul (20, 30, 40, 50, 60, 63, 70, 80, 82, 90), welche in einer äußeren Hülle (21, 31, 41, 51, 61, 62, 71, 81, 91) ausgeformt sind, wobei jedes optische Modul eine einzige ummantelte (2) Lichtleitfaser (1) aufweist, die von einer Entkopplungszwischenschicht (3) und von einer festen Schale (4) umgeben ist, welche aus mit Harz gehärteten Mikrofaserbändern besteht und einen Mikroträger (12) bildet, wobei jedes Verstärkungsmodul aus Mikrofaserbändern besteht, welche nicht mit Hilfe von Harz gehärtet sind, wobei das oder die Verstärkungsmodule aus einer Faserbänderfüllung gebildet sind, welche eine effektive Gesamtfläche in dem Querschnitt des Kabels belegt.

**2.** Kabel gemäß Anspruch 1, bei welchem das optische Modul mit fester Schale eine Streckfestigkeit in der Größenordnung von 150 bis 400 Newton für eine Streckung von 1 % und eine größere Druckfestigkeit als 15.000 Newton pro Längenmeter aufweist.

**3.** Kabel gemäß irgendeinem der Ansprüche 1 und 2, bei welchem die Mikrofaserbänder des weichen Verstärkungsmoduls einen Durchmesser aufweisen, der in der Nähe des Mikrometerbereiches liegt.

**4.** Kabel gemäß einem der Ansprüche 1 bis 3, bei welchem die Faserbänder des Verstärkungsmoduls aus Fasern oder einem Fasergemisch bestehen, welche aus einer Gruppe ausgewählt sind, die Fasern aus dem Material Aramid, Kohlenstoff, Keramik, Polymer und Glas der Art E, R und S umfasst.

**5.** Kabel gemäß einem der Ansprüche 1 bis 4, bei welchem ein optisches Modul (10) außerdem eine Endbeschichtung (5) aus Antihaftmaterial mit einer Dicke in der Größenordnung von 100 bis 200 Mikrometern aufweist, um ein Gleiten des optischen Moduls (10) in dem Kabel zu ermöglichen.

**6.** Kabel gemäß Anspruch 5, bei welchem die Antihaftendbeschichtung (5) aus einem Material besteht, das aus einer Gruppe ausgewählt ist, welche die Materialien Polyamid, Polyester, Polyethersulfon, Polyetherkoton und Polyetherimid umfasst.

**7.** Kabel gemäß Anspruch 6, bei welchem die Beschichtung (5) feuersicher imprägniert ist.

**8.** Kabel gemäß einem der Ansprüche 1 bis 7, bei welchem die äußere Hülle (21) aus einem Polymer besteht, welches ein Elastizitätsmodul in der Größenordnung von 1000 MPa bis 5000 MPa unter den Nutzungsbedingungen aufweist.

**9.** Kabel gemäß einem der Ansprüche 1 bis 8, bei welchem die äußere Hülle (21) aus einem Polymer mit hoher Dichte besteht, das aus einer Polymergruppe ausgewählt ist, welche Polyethylen, Polyamid, Polyester, Polyetheretherkoton, Polyetherimid, Polyethersulfon, angereichertes Polyolefin, angereichertes Polyvinylchlorid und insbesondere mit Glaskügelchen oder Glasmikrofasern verstärkte Polymere umfasst.

**10.** Kabel (300) gemäß einem der Ansprüche 1 bis 9, bei welchem ein optisches Modul (10) in einem Rohr (13) aus Polymer angeordnet ist, wobei das Rohr eine Wanddicke in der Größenordnung von 200 bis 1000 Mikrometern aufweist.

**11.** Kabel (200, 300) gemäß einem der Ansprüche 1 bis 10, bei welchem ein optisches Modul (10) in ein röhrenförmiges Verstärkungsmodul (20, 30) eingeschoben ist.

**12.** Kabel (500) gemäß einem der Ansprüche 1 bis 11, mit einem Bündel aus optischen Modulen (10, 10'), die in einem Verstärkungsmodul (50) eingebettet sind.

**13.** Kabel (901, 902) gemäß einem der Ansprüche 1 bis 12 mit einem Tragwerk, das aus einem thermoplastischen Sprengring (100) besteht, wobei ein Bündel aus optischen Modulen (10, 10', 10", 10''') in Aussparungen des Sprengrings angeordnet ist.

**14.** Kabel (901, 902) gemäß Anspruch 13, bei welchem das Bündel aus optischen Modulen (10, 10') in ein röhrenförmiges Verstärkungsmodul (90) eingeschoben ist.

**15.** Kabel (601, 602, 603, 701, 702, 801, 802) gemäß einem der Ansprüche 1 bis 14, mit einem zylindrischen Bündel, welches Verstärkungsmodule (60, 60', 63, 70, 80, 82) und optische Module (10, 10') umfasst.

**16.** Kabel (401, 402, 403) gemäß einem der Ansprüche 1 bis 9, mit Modulen (40, 10, 10'), welche praktisch koplanare Achsen aufweisen, wobei die äußere Hülle (41) ein flaches Band bildet, und mit einem einzigen Verstärkungsmodul (40), das seitlich und mit einem Abstand bezüglich der zugeordneten optischen Module (10, 10') angeordnet ist, um das Kabel durch Aufpressen auf das seitliche Verstärkungsmodul zu fixieren.

**Claims**

**1.** Modular optical transmission cable (200, 300, 401, 402, 403, 500, 601, 602, 603, 701, 702, 801, 802, 901, 902) which is flexible and strong under compression, comprising at least one optical module (10) which is in itself strong under compression, and at least one flexible reinforcement module (20, 30, 40, 50, 60, 63, 70, 80, 82, 90), moulded in an external sheath (21, 31, 41, 51, 61, 62, 71, 81, 91), each optical module comprising a single optical fibre (1) in a sheath (2), covered with an intermediate decoupling layer (3) and by a rigid shell (4) formed from strands of microfibres hardened with resin and forming a microcarrier (12), each reinforcement module consisting of strands of microfibres not hardened by means of resin, the reinforcement module or modules being formed by a filling of strands occupying a total effective surface area in the transverse section of the cable.

**2.** Cable according to claim 1, in which the optical module with a rigid shell has a yield strength of around 150 to 400 newtons for an elongation of 1% and a crushing strength of more than 15,000 newtons per metre of length.

**3.** Cable according to either one of claims 1 and 2, in which the microfibres of the flexible reinforcement module strands have a diameter of around 1 micrometre.

**4.** Cable according to one of claims 1 to 3, in which the reinforcement module strands are formed from fibres or a mixture of fibres chosen from amongst a group comprising fibres made from aramid, carbon, ceramic or polymer materials, or glass of the E, R and S type.

**5.** Cable according to one of claims 1 to 4, in which an optical module (10) also comprises a final coating (5) of anti-adhesive material with a thickness of around 100 to 200 micrometres, to allow the sliding of the optical module (10) in the cable.

**6.** Cable according to claim 5, in which the final anti-adhesive coating (5) is formed from a material chosen from a group comprising polyamide, polyester, polyether sulfone, polyether ketone and polyether imide materials.

**7.** Cable according to claim 6, in which the coating (5) is flame-retarded.

**8.** Cable according to one of claims 1 to 7, in which the external sheath (21) is formed from a polymer having a Young's modulus of around 1,000 to 5,000 MPA under the conditions of use.

**9.** Cable according to one of claims 1 to 8, in which the external sheath (21) is formed from a high-density polymer chosen from a group of polymers com-

prising polyethylene, polyamide, polyester, poly-ether ketone, polyether imide, polyether sulfone, polyolefin with a filler, polyvinyl chloride with a filler, and in particular polymers filled with glass balls or microfibres.

10. Cable (300) according to one of claims 1 to 9, in which an optical module (10) is disposed in a polymer tube (13), the tube having a wall with a thickness of around 200 to 1,000 micrometres.

11. Cable (200, 300) according to one of claims 1 to 10, in which an optical module (10) is inserted in a tubular reinforcement module (20, 30).

12. Cable (500) according to one of claims 1 to 11, comprising a cluster of optical modules (10, 10') embedded in a reinforcement module (50).

13. Cable (901, 902) according to one of claims 1 to 12, comprising a framework formed by a thermoplastic ring (100), a cluster of optical modules (10, 10' 10", 10"') being disposed in recesses in the ring.

14. Cable (901, 902) according to claim 13, in which the cluster of optical modules (10, 10') is inserted in a tubular reinforcement module (90).

15. Cable (601, 602, 603, 701, 702, 801, 802) according to one of claims 1 to 14, comprising a cylindrical cluster comprising reinforcement modules (60, 60', 63, 70, 80, 82) and optical modules (10, 10').

16. Cable (401, 402, 403) according to one of claims 1 to 9, comprising modules (40, 10, 10') having substantially coplanar axes, the external sheath (41) forming a flat ribbon, and comprising a single reinforcement module (40) disposed laterally and with a separation with respect to the associated optical modules (10, 10'), in order to fix the cable by clamping on the lateral reinforcement module.

*FIG.1*

5
4 } 12
3
} 10
2 } 11
1

1mm

0,5

0mm

*FIG.2*

10

200

1mm
0,5
0mm

20

21

*FIG.3*

31
30
13
10

300

1mm
0,5
0mm

FIG.4

4A

4B

4C

FIG.5

FIG.6

6A

6B

6C

## FIG.7

### 7A

### 7B

## FIG.8

### 8A

### 8B

# FIG.9